# EUROPEAN PATENT APPLICATION

(11) **EP 4 614 617 A1**
(43) Date of publication of application: **10.09.2025**
(21) Application number: 23929411.9
(22) Date of filing: 31.03.2023
(51) Int. Cl.: H01M 4/525

(54) **POSITIVE ELECTRODE ACTIVE MATERIAL, PREPARATION METHOD THEREFOR, POSITIVE ELECTRODE SHEET, SECONDARY BATTERY AND ELECTRICAL APPARATUS**

(71) Applicant: Contemporary Amperex Technology (Hong Kong) Limited, Hong Kong (HK)
(72) Inventor: YUN, Liang, Ningde, Fujian 352100 (CN); SUN, Xin, Ningde, Fujian 352100 (CN); WU, Lili, Ningde, Fujian 352100 (CN); SONG, Peidong, Ningde, Fujian 352100 (CN); CHEN, Xingbu, Ningde, Fujian 352100 (CN); DONG, Miaomiao, Ningde, Fujian 352100 (CN)
(74) Representative: Kraus & Lederer PartGmbB
(86) International application number: PCT/CN2023/085514
(87) International publication number: WO 2024/197826

(57) **Abstract**

The present application provides a positive electrode active material, a preparation method therefor, a secondary battery, and an electrical apparatus. The chemical formula of the positive electrode active material is LiₐNiₓCo_{y}M_{1-x-y}O₂, where M comprises one or more of Mn, Al, B, Zr, Sr, Y, Sb, W, Ti, Mg and Nb, 0.55≤x≤1.0, 0≤y≤0.45, 0.8≤a≤1.2, the positive electrode active material being a hollow structure, and the inner diameter d1 of the hollow structure being 0.3 µm-5 µm.

## Description

### TECHNICAL FIELD

The present application relates to the technical field of secondary batteries, and in particular, to a positive electrode active material and a preparation method therefor, a positive electrode plate, a secondary battery, and an electric device.

### BACKGROUND

Secondary batteries have the characteristics of high capacity and long lifespan and are therefore widely used in electronic devices such as mobile phones, laptop computers, electric bicycles, electric vehicles, electric airplanes, electric ships, electric toy cars, electric toy ships, electric toy airplanes, and electric tools. As secondary batteries have achieved great development, higher requirements have been placed on their performance. To improve the performance of the secondary battery, materials inside the secondary battery, such as the positive electrode active material, are generally optimized. The positive electrode active material serves as a carrier of metal ions and electrons in the secondary battery, functions in energy storage and release, and has a significant impact on the performance of the secondary battery. However, when the currently improved positive electrode active material is applied to a secondary battery, the cycle performance and rate capability of the secondary battery are still poor.

### SUMMARY

The present application is made in view of the above issues, and the objective of the present application is to provide a positive electrode active material with a hollow structure, where the inner diameter of the hollow structure is 0.3 µm-5 µm. The positive electrode active material can effectively enhance the cycle performance of the battery while maintaining excellent rate capability of the battery.

A first aspect of the present application provides a positive electrode active material, and a chemical formula of the positive electrode active material is LiₐNiₓCo_{y}M_{1-x-y}O₂, where

M includes one or more of Mn, Al, B, Zr, Sr, Y, Sb, W, Ti, Mg, and Nb, 0.55 ≤ x ≤ 1.0, 0 ≤ y ≤ 0.45, 0.8 ≤ a ≤ 1.2, the positive electrode active material is of a hollow structure, and an inner diameter d1 of the hollow structure is 0.3 µm-5 µm.

In one aspect, the presence of the hollow structure can buffer the volume change of the positive electrode active material during the charging and discharging processes, thereby stabilizing the structure and improving cycle performance. In another aspect, the positive electrode active material with the hollow structure contains numerous three-dimensional pore passages, which enlarge the contact area between the material and the electrolytic solution, shorten the lithium-ion migration distance, and reduce the internal resistance of the battery, such that the battery exhibits excellent rate capability. Meanwhile, the positive electrode active material with the hollow structure provides more lithium-ion active sites, thereby enhancing the specific capacity, discharge capacity, and energy density of the material.

In any embodiment, in the chemical formula LiₐNiₓCo_{y}M_{1-x-y}O₂, 0.9 ≤ x ≤ 1.0, 0 ≤ y ≤ 0.1, and 0.8 ≤ a ≤ 1.2, and optionally, 0.95 ≤ x ≤ 0.995, 0 ≤ y ≤ 0.05, and 0.8 ≤ a ≤ 1.2.

In any embodiment, the inner diameter d1 of the hollow structure is 1.5 µm-5 µm, further shortening the lithium-ion migration distance and improving the rate capability of the battery.

In any embodiment, the positive electrode active material satisfies the following relationship: 1 ≤ Dv50 / (d1 + d2) ≤ 4, where

d1 µm is the inner diameter of the hollow structure, d2 µm is an outer wall thickness of the hollow structure, and Dv50 µm is Dv50 of the positive electrode active material.

By controlling the Dv50 of the positive electrode active material as well as the inner diameter d1 and the outer wall thickness d2 of the hollow structure to satisfy 1 ≤ Dv50 / (d1 + d2) ≤ 4, the energy density of the battery can be enhanced, and the rate capability of the battery can be improved.

In any embodiment, the outer wall thickness d2 of the hollow structure is 3 µm-10 µm, optionally 3 µm-7 µm.

By controlling the outer wall thickness d2 of the hollow structure within a suitable range, the structural stability of the material can be enhanced, enabling the battery to achieve high discharge capacity and energy density, and excellent rate capability and cycle performance, thereby comprehensively improving the electrochemical performance of the battery.

In any embodiment, the positive electrode active material has a Dv50 of 5 µm-15 µm, optionally 8 µm-10 µm.

Controlling the Dv50 of the positive electrode active material within a suitable range can enhance the energy density and rate capability of the battery.

In any embodiment, the positive electrode active material has a porosity of 0-20%, optionally 2-15%.

By controlling the porosity of the positive electrode active material within a suitable range, the battery achieves high discharge capacity and energy density, and excellent rate capability and cycle performance, thereby comprehensively improving the electrochemical performance of the battery.

In any embodiment, the positive electrode active material has a specific surface area of 0.4 m²/g-1.4 m²/g.

By controlling the specific surface area of the positive electrode active material within a suitable range, the battery achieves high discharge capacity and energy density, and excellent rate capability and cycle performance, thereby comprehensively improving the electrochemical performance of the battery.

In any embodiment, the positive electrode active material has a SPAN of 1-1.5, optionally 1.2-1.4.

Controlling the SPAN of the positive electrode active material within a suitable range can enhance the discharge capacity of the battery.

In any embodiment, a (010) crystal plane area of the positive electrode active material is greater than or equal to 6 µm².

By controlling the (010) crystal plane area of the positive electrode active material to be greater than or equal to 6 µm², the battery achieves high discharge capacity and energy density, and excellent rate capability and cycle performance, thereby comprehensively improving the electrochemical performance of the battery.

In any embodiment, the primary particle of the positive electrode active material has a particle size of 0. 1-0.8 µm, optionally 0.15-0.3 µm.

Controlling the particle size of the primary particle of the positive electrode active material within a suitable range can enhance the discharge capacity and energy density of the battery while improving the rate capability of the battery.

A second aspect of the present application provides a preparation method for a positive electrode active material, including step (1) and step (2):
step (1): mixing a mixed source containing a nickel source and a cobalt source with a hard template agent, a complexing agent, and a precipitant, and performing a coprecipitation reaction to obtain a precursor, optionally, the mixed source containing an M source; and
step (2): calcining the precursor with a lithium source to obtain the positive electrode active material,
a chemical formula of the positive electrode active material being LiₐNiₓCo_{y}M_{1-x-y}O₂,
where M includes one or more of Mn, Al, B, Zr, Sr, Y, Sb, W, Ti, Mg, and Nb, 0.55 ≤ x ≤ 1.0, 0 ≤ y ≤ 0.45, 0.8 ≤ a ≤ 1.2, the positive electrode active material is of a hollow structure, and an inner diameter of the hollow structure is 0.3 µm-5 µm.

The surface of the hard template agent is coated with a dense layer of nickel-cobalt hydroxide through the coprecipitation reaction to form a compact core-shell structure, and the hard template agent is then removed by calcination to obtain the positive electrode active material with the hollow structure. The preparation method for the positive electrode active material described above is simple and the production cost is low. The prepared positive electrode active material features a hollow structure with an inner diameter of 0.3 µm-5 µm, facilitating the intercalation and deintercalation of lithium ions. Additionally, the hollow structure can buffer the volume change of the positive electrode active material during the charging and discharging processes, thereby stabilizing the structure and improving cycle performance.

In any embodiment, in the chemical formula LiₐNiₓCo_{y}M_{1-x-y}O₂, 0.9 ≤ x ≤ 1.0, 0 ≤ y ≤ 0.1, and 0.8 ≤ a ≤ 1.2, and optionally, 0.95 ≤ x ≤ 0.995, 0 ≤ y ≤ 0.05, and 0.8 ≤ a ≤ 1.2.

In any embodiment, the hard template agent has an average diameter of 0.2 µm-3 µm, optionally 1 µm-3 µm.

By controlling the average diameter of the hard template agent within a suitable range, and consequently regulating the inner diameter of the hollow structure in the positive electrode active material within a suitable range, both the lithium-ion diffusion path and the stability of the hollow structure can be optimized, thereby comprehensively improving the cycle performance and rate capability of the battery.

In any embodiment, the hard template agent includes one or more of carbon-nitrogen composite spheres, carbon spheres, phenolic resin microspheres, and melamine resin microspheres, optionally including phenolic resin spheres.

In any embodiment, a ratio of a weight of the hard template agent added in step (1) to a total weight of a nickel element and a cobalt element in the mixed source is 1:20 to 3:4; or
a ratio of a weight of the hard template agent added in step (1) to a total weight of the nickel element, the cobalt element, and an M element in the mixed source is 1:20 to 3:4.

By controlling the total weight of the hard template agent and the nickel element, the cobalt element, and/or the M element in the mixed source within a suitable range, the surface of the hard template agent can be stably and uniformly coated with the nickel-cobalt hydroxide layer, such that the hollow structure has a suitable inner diameter and outer wall thickness, and the positive electrode active material exhibits excellent structural performance, thereby improving the cycle performance and rate capability of the battery.

In any embodiment, a pH value of the coprecipitation reaction in step (1) is 9-13.

A suitable pH value during the coprecipitation reaction ensures a smoother and more efficient reaction, and thus the surface of the hard template agent can be stably and uniformly coated with the nickel-cobalt hydroxide layer, such that the hollow structure has a suitable inner diameter and outer wall thickness, and the positive electrode active material exhibits excellent structural performance, thereby improving the cycle performance and rate capability of the battery.

In any embodiment, a reaction temperature of the coprecipitation reaction in step (1) is 60-85 °C.

A suitable reaction temperature during the coprecipitation reaction ensures a smoother and more efficient reaction, and thus the surface of the hard template agent can be stably and uniformly coated with the nickel-cobalt hydroxide layer, such that the hollow structure has a suitable inner diameter and outer wall thickness, and the positive electrode active material exhibits excellent structural performance, thereby improving the cycle performance and rate capability of the battery.

In any embodiment, a reaction time of the coprecipitation reaction in step (1) is 5-20 h.

A suitable reaction time for the coprecipitation reaction ensures a smoother and more efficient reaction, and thus the surface of the hard template agent can be stably and uniformly coated with the nickel-cobalt hydroxide layer, such that the hollow structure has a suitable inner diameter and outer wall thickness, and the positive electrode active material exhibits excellent structural performance, thereby improving the cycle performance and rate capability of the battery.

In any embodiment, a stirring speed of the coprecipitation reaction in step (1) is 200-900 rpm.

A suitable stirring speed during the coprecipitation reaction ensures a smoother and more efficient reaction, and thus the surface of the hard template agent can be stably and uniformly coated with the nickel-cobalt hydroxide layer, such that the hollow structure has a suitable inner diameter and outer wall thickness, and the positive electrode active material exhibits excellent structural performance, thereby improving the cycle performance and rate capability of the battery.

In any embodiment, step (1) specifically includes:
preparing a hard template agent solution with a mass concentration of 1-10 g/L, a precipitant solution with a molar concentration of 1-2 mol/L, a complexing agent solution with a molar concentration of 4-8 mol/L, and a mixed salt solution containing a nickel element and a cobalt element with a total molar concentration of 1-2 mol/L, optionally, the mixed salt solution further containing an M element;
simultaneously adding the precipitant solution, the complexing agent solution, and the mixed salt solution into the hard template agent solution; and
performing the coprecipitation reaction to obtain the precursor.

By controlling the hard template agent, the precipitant, the complexing agent, and the mixed salt solution within a suitable range, the coprecipitation reaction is performed more smoothly and efficiently. Moreover, during the coprecipitation reaction process, the nickel-cobalt hydroxide can precipitate more slowly, stably, and densely onto the surface of the hard template agent, forming a more uniform housing structure on the surface of the hard template agent, such that the hollow structure has a suitable inner diameter, outer wall thickness, and Dv50, and the positive electrode active material exhibits excellent structural performance, thereby enhancing the cycle performance and rate capability of the battery.

In any embodiment, the calcination in step (2) is performed at 700-900 °C.

The calcination in step (2) is performed for 6-18 h.

By controlling the calcination temperature and calcination time within a suitable range, the hard template agent can be completely removed to form a hollow structure while ensuring the structural stability of the positive electrode active material. This results in a stable hollow structure for the positive electrode active material, thereby enhancing the cycle performance and rate capability of the battery.

A third aspect of the present application provides a positive electrode plate. The positive electrode plate includes the positive electrode active material according to the first aspect or the positive electrode active material obtained by the preparation method according to the second aspect.

A fourth aspect of the present application provides a secondary battery, including the positive electrode plate according to the third aspect.

A fifth aspect of the present application provides an electric device, including the secondary battery according to the fourth aspect.

### BRIEF DESCRIPTION OF THE DRAWINGS

FIG. 1 is a scanning electron microscope image of a positive electrode active material shown in Example 4 of the present application;
FIG. 2 is a schematic diagram of a secondary battery according to one embodiment of the present application;
FIG. 3 is an exploded view of the secondary battery according to one embodiment of the present application as shown in FIG. 2;
FIG. 4 is a schematic diagram of a battery module according to one embodiment of the present application;
FIG. 5 is a schematic diagram of a battery pack according to one embodiment of the present application;
FIG. 6 is an exploded view of the battery pack according to one embodiment of the present application as shown in FIG. 5; and
FIG. 7 is a schematic diagram of an electric device using a secondary battery as a power source according to one embodiment of the present application.

### Description of the reference numerals:

1: battery pack; 2: upper case body; 3: lower case body; 4: battery module; 5: secondary battery; 51: housing; 52: electrode assembly; 53: cover plate.

### DETAILED DESCRIPTION

Hereinafter, embodiments specifically disclosing the positive electrode active material and the preparation method therefor, the secondary battery, and the electric device of the present application are described in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

In the prior art, nickel-rich ternary materials have a high theoretical specific capacity and a high discharge plateau, and are low-cost, making them one of the popular positive electrode active materials for secondary batteries. However, due to the similar ionic radii of Ni⁺² and Li⁺ in ternary materials, severe cation mixing may occur, leading to the degradation of the electrochemical performance of the material. Particularly, in high-nickel systems, the tendency of cation mixing increases, resulting in the deterioration of the cycle performance of the battery. In another aspect, during the charging and discharging processes of lithium-ion batteries, the occurrence of interface side reactions may lead to the continuous decomposition of the electrolytic solution at the positive and negative electrode interfaces, as well as phase transitions at the interface of the positive electrode active material, which leads to the loss of active Li and an increase in the impedance of the lithium-ion batteries, thereby reducing the rate capability of the material. It is necessary to develop a positive electrode active material with high specific capacity, and excellent cycle performance and rate capability to meet the application requirements of the new generation of electrochemical systems.

### [Positive Electrode Active Material]

Based on the above, the present application provides a positive electrode active material, and the chemical formula of the positive electrode active material is LiₐNiₓCo_{y}M_{1-x-y}O₂, where

M includes one or more of Mn, Al, B, Zr, Sr, Y, Sb, W, Ti, Mg, and Nb, 0.55 ≤ x ≤ 1.0, 0 ≤ y ≤ 0.45, 0.8 ≤ a ≤ 1.2, the positive electrode active material is of a hollow structure, and an inner diameter d1 of the hollow structure is 0.3 µm-5 µm.

The term "hollow structure" used herein refers to a solid structure having an internal cavity enclosed by a distinct shell layer.

The term "inner diameter of the hollow structure" used herein refers to the longest diameter of the circular or circular-like cross-section of the internal cavity of the positive electrode active material.

The inner diameter of the hollow structure can be measured by any means known in the art. As an example, a conductive adhesive is affixed to the sample stage, and a powder sample of the positive electrode active material is evenly spread onto the conductive adhesive. The unattached powder is removed using an air blower, followed by gold sputtering. The particles of the powder sample are then cross-sectioned using argon plasma. A scanning electron microscope image of the powder sample is obtained using a scanning electron microscope under an accelerating voltage of 10 kV and an emission current of 10 mA. The inner diameter of the hollow structure is measured based on the scanning electron microscope image. At least three samples are measured, with at least 50 pieces of data measured for each sample, and the mean value is taken as the inner diameter of the hollow structure of the sample.

In some embodiments, in the chemical formula LiₐNiₓCo_{y}M_{1-x-y}O₂, a is any value selected from 0.8, 0.9, 1.0, 1.1, and 1.2, or in a range defined by any two of these values.

In some embodiments, in the chemical formula LiₐNiₓCo_{y}M_{1-x-y}O₂, x is any value selected from 0.55, 0.6, 0.7, 0.8, 0.9, 0.95, and 0.995, or in a range defined by any two of these values.

In some embodiments, in the chemical formula LiₐNiₓCo_{y}M_{1-x-y}O₂, y is any value selected from 0, 0.1, 0.2, 0.3, 0.4, and 0.45, or in a range defined by any two of these values.

In some embodiments, in the chemical formula LiₐNiₓCo_{y}M_{1-x-y}O₂, 0.90 ≤ x ≤ 1.0, 0 ≤ y ≤ 0.1, and 0.8 ≤ a ≤ 1.2.

In some embodiments, in the chemical formula LiₐNiₓCo_{y}M_{1-x-y}O₂, 0.95 ≤ x ≤ 0.995, 0 ≤ y ≤ 0.05, and 0.8 ≤ a ≤ 1.2.

In some embodiments, the chemical formula of the positive electrode active material is LiₐNiₓCo_{y}Mn_{1-x-y}O₂, where 0.95 ≤ x ≤ 0.995, 0 ≤ y ≤ 0.05, and 0.8 ≤ a ≤ 1.2.

In some embodiments, the chemical formula of the positive electrode active material is LiₐNiₓCo_{y}Sb_{1-x-y}O₂, where 0.95 ≤ x ≤ 0.995, 0 ≤ y ≤ 0.05, and 0.8 ≤ a ≤ 1.2.

In some embodiments, the chemical formula of the positive electrode active material is LiₐNiₓCo_{y}O₂, where 0.95 ≤ x ≤ 0.995, 0.005 ≤ y ≤ 0.05, x + y = 1, and 0.8 ≤ a ≤ 1.2.

The use of the above materials ensures that the positive electrode active material has a high specific capacity, such that the battery exhibits high discharge capacity and energy density.

In some embodiments, the inner diameter d1 of the hollow structure may be selected from any one of the following ranges: 0.3 µm-0.5 µm, 0.3 µm-0.9 µm, 0.3 µm-1 µm, 0.3 µm-2 µm, 0.3 µm-3 µm, 0.3 µm-4 µm, 0.3 µm-5 µm, 1 µm-2 µm, 1 µm-3 µm, 1 µm-4 µm, 1 µm-5 µm, 2 µm-3 µm, 2 µm-4 µm, 2 µm-5 µm, 3 µm-4 µm, 3 µm-5 µm, and 4 µm-5 µm.

In one aspect, the presence of the hollow structure can buffer the volume change of the positive electrode active material during the charging and discharging processes, thereby stabilizing the structure and improving cycle performance. In another aspect, the positive electrode active material with the hollow structure contains numerous three-dimensional pore passages, which enlarge the contact area between the material and the electrolytic solution, shorten the lithium-ion migration distance, and reduce the internal resistance of the battery, such that the battery exhibits excellent rate capability. Meanwhile, the positive electrode active material with the hollow structure provides more lithium-ion active sites, thereby enhancing the specific capacity, discharge capacity, and energy density of the material.

In some embodiments, the inner diameter d1 of the hollow structure is 1.5 µm-5 µm. In some embodiments, the inner diameter d1 of the hollow structure may be selected from any one of the following ranges: 1.5 µm-3 µm, 2 µm-4 µm, 2 µm-5 µm, 3 µm-4 µm, 3 µm-5 µm, and 4 µm-5 µm.

The inner diameter d1 of the hollow structure is within a suitable range, further shortening the lithium-ion migration distance, and improving the rate capability of the battery.

In some embodiments, the positive electrode active material satisfies the following relationship: 1 ≤ Dv50 / (d1 + d2) ≤ 4, where

d1 µm is the inner diameter of the hollow structure, d2 µm is an outer wall thickness of the hollow structure, and Dv50 µm is Dv50 of the positive electrode active material.

In some embodiments, the positive electrode active material satisfies any one of the following relationships: 1 ≤ Dv50 / (d1 + d2) ≤ 2, 1 ≤ Dv50 / (d1 + d2) ≤ 3, 1 ≤ Dv50 / (d1 + d2) ≤ 4, 2 ≤ Dv50 / (d1 + d2) ≤ 3, 2 ≤ Dv50 / (d1 + d2) ≤ 4, and 3 ≤ Dv50 / (d1 + d2) ≤ 4, where
d1 µm is the inner diameter of the hollow structure, d2 µm is the outer wall thickness of the hollow structure, and Dv50 µm is Dv50 of the positive electrode active material.

The term "outer wall thickness of the hollow structure" used herein refers to the thickness of the outer housing of the hollow structure.

The outer wall thickness of the hollow structure may be measured by any means known in the art. As an example, a conductive adhesive is affixed to the sample stage, and a powder sample of the positive electrode active material is evenly spread onto the conductive adhesive. The unattached powder is removed using an air blower, followed by gold sputtering. The particles of the powder sample are then cross-sectioned using argon plasma. A scanning electron microscope image of the powder sample is obtained using a scanning electron microscope under an accelerating voltage of 10 kV and an emission current of 10 mA. The outer wall thickness of the hollow structure is measured based on the scanning electron microscope image. At least three samples are measured, with at least 50 pieces of data measured for each sample, and the mean value is taken as the outer wall thickness of the hollow structure of the sample.

The term "Dv50" used herein refers to the median particle size of the positive electrode active material. Specifically, Dv50 refers to a particle size at which the cumulative volume reaches 50% starting from the small particle size side in a volume-based particle size distribution of the positive electrode active material.

The Dv50 of the positive electrode active material can be tested by any means known in the art. As an example, the numerical value of the Dv50 of the positive electrode active material can be measured by reference to the method specified in GB/T19077-2016.

The Dv50 of the positive electrode active material, as well as the inner diameter d1 and the outer wall thickness d2 of the hollow structure, are key structural parameters of the structure of the positive electrode active material, which influence the structural performance of the material. When the Dv50 of the positive electrode active material, as well as the inner diameter d1 and the outer wall thickness d2 of the hollow structure, are within suitable ranges, the material provides more lithium-ion active sites, enhancing the specific capacity of the material and thereby increasing battery energy density of the material. Additionally, the structural stability of the material can be improved, lithium-nickel cation mixing is effectively mitigated, the migration rates of lithium ions and electrons are significantly increased, and the rate capability of the material is enhanced.

By controlling the Dv50 of the positive electrode active material as well as the inner diameter d1 and the outer wall thickness d2 of the hollow structure to satisfy 1 ≤ Dv50 / (d1 + d2) ≤ 4, the energy density of the battery can be enhanced, and the rate capability of the battery can be improved.

In some embodiments, the outer wall thickness d2 of the hollow structure is 3 µm-10 µm. In some embodiments, the outer wall thickness d2 of the hollow structure may be selected from any one of the following ranges: 3 µm-4 µm, 3 µm-5 µm, 3 µm-6 µm, 3 µm-7 µm, 3 µm-8 µm, 3 µm-9 µm, 3 µm-10 µm, 4 µm-5 µm, 4 µm-6 µm, 4 µm-7 µm, 4 µm-8 µm, 4 ¡lm-9 µm, 4 µm-10 µm, 5 µm-6 µm, 5 µm-7 µm, 5 µm-8 µm, 5 ¡lm-9 µm, 5 µm-10 µm, 6 µm-7 µm, 6 µm-8 µm, 6 µm-9 µm, 6 µm-10 µm, 7 µm-8 µm, 7 µm-9 µm, 7 µm-10 µm, 8 µm-9 µm, 8 µm-10 µm, and 9 µm-10 µm.

By controlling the outer wall thickness d2 of the hollow structure within a suitable range, the structural stability of the material can be enhanced, enabling the battery to achieve high discharge capacity and energy density, and excellent rate capability and cycle performance, thereby comprehensively improving the electrochemical performance of the battery.

In some embodiments, the outer wall thickness d2 of the hollow structure is 3 µm-7 µm. In some embodiments, the outer wall thickness d2 of the hollow structure may be selected from any one of the following ranges: 3 µm-4 µm, 3 µm-5 µm, 3 µm-6 µm, 3 µm-7 µm, 4 µm-5 µm, 4 µm-6 µm, 4 µm-7 µm, 5 µm-6 µm, 5 µm-7 µm, and 6 µm-7 µm.

The outer wall thickness of the hollow structure is within a suitable range, such that the cycle performance and rate capability of the battery can be further enhanced.

In some embodiments, the Dv50 of the positive electrode active material is 5 µm-15 µm. In some embodiments, the Dv50 of the positive electrode active material is in any one of the following ranges: 5 ¡lm-9 µm, 5 µm-10 µm, 5 µm-15 µm, 9 µm-10 µm, 9 µm-15 µm, and 10 µm-15 µm.

Particles of different sizes have varying areas and different numbers of reaction active sites. Therefore, the particle size affects the ion deintercalation and intercalation rates, thereby affecting the specific capacity of the material. By controlling the Dv50 of the positive electrode active material within a suitable range, the energy density and rate capability of the battery can be enhanced.

In some embodiments, the Dv50 of the positive electrode active material is 8 µm-10 µm. In some embodiments, the Dv50 of the positive electrode active material is in any one of the following ranges: 8 µm-9 µm, 8 µm-10 µm, and 9 µm-10 µm.

Controlling the Dv50 of the positive electrode active material within a suitable range can further enhance the energy density and rate capability of the battery.

In some embodiments, the porosity of the positive electrode active material is 0-20%. In some embodiments, the porosity of the positive electrode active material may be selected from any one of the following ranges: 0-5%, 0-10%, 0-15%, 0-20%, 5-10%, 5-15%, 5-20%, 10-15%, 10-20%, or 15-20%.

The term "porosity" used herein refers to the ratio of the pore volume in the positive electrode active material to the total volume of the positive electrode active material.

The porosity of the positive electrode active material can be tested by any means known in the art. As an example, the porosity can be measured by a gas displacement method according to GB/T24586. Porosity = (V1 - V2) / V1 × 100%, where V1 is the apparent volume of the sample, and V2 is the true volume of the sample.

Controlling the porosity of the positive electrode active material within a suitable range facilitates electrolytic solution infiltration, ensuring full contact between the positive electrode active material and the electrolytic solution, and shortening the lithium-ion transport path. The battery achieves high discharge capacity and energy density, and excellent rate capability and cycle performance, thereby comprehensively improving the electrochemical performance of the battery.

In some embodiments, the porosity of the positive electrode active material is 2-15%. In some embodiments, the porosity of the positive electrode active material may be selected from any one of the following ranges: 2-5%, 2-10%, 2-15%, 5-10%, 5-15%, and 10-15%.

Controlling the porosity of the positive electrode active material within a suitable range can further enhance the discharge capacity and energy density of the battery while improving the rate capability and cycle performance of the battery.

In some embodiments, the positive electrode active material has a specific surface area of 0.4 m²/g-1.4 m²/g. In some embodiments, the specific surface area of the positive electrode active material may be selected from any one of the following ranges: 0.4 m²/g-0.7 m²/g, 0.4 m²/g-0.9 m²/g, 0.5 m²/g-0.7 m²/g, 0.5 m²/g-0.9 m²/g, 0.5 m²/g-1.1 m²/g, 0.7 m²/g-0.9 m²/g, 0.7 m²/g-1.1 m²/g, and 0.9 m²/g-1.1 m²/g.

The specific surface area of the positive electrode active material may be measured by any means known in the art. As an example, reference may be made to GB/T 19587-2017 *Determination of the specific surface area of solids by gas adsorption using the BET method.* The TriStar II 3020 device is used for measurement. The positive electrode active material is dispersed in a dispersant (ethanol) and subjected to ultrasonic treatment for 30 min. The obtained material is then placed in a vacuum drying oven for drying, and finally, the specific surface area of the positive electrode active material is measured using a specific surface area analyzer.

A larger the specific surface area of the positive electrode active material results in more active sites in the positive electrode active material, thereby accelerating the electron transfer in the positive electrode active material and achieving better dynamics performance of the battery. However, an excessive number of active sites may increase side reactions between the positive electrode active material and the electrolytic solution, leading to deterioration of the cycle performance of the battery. Conversely, too few active sites may reduce the chemical reactions within the battery system, resulting in lower capacity and degraded cycle performance of the battery.

By controlling the specific surface area of the positive electrode active material within a suitable range, the battery achieves high discharge capacity and energy density, and excellent rate capability and cycle performance, thereby comprehensively improving the electrochemical performance of the battery.

In some embodiments, the positive electrode active material has a SPAN of 1-1.5. In some embodiments, the SPAN of the positive electrode active material may be selected from any one of the following ranges: 1-1.1, 1-1.2, 1-1.3, 1-1.4, 1-1.5, 1.1-1.2, 1.1-1.3, 1.1-1.4, 1.1-1.5, 1.2-1.3, 1.2-1.4, 1.2-1.5, 1.3-1.4, 1.3-1.5, and 1.4-1.5.

The term "SPAN" used herein refers to the distribution span, and SPAN is calculated as (Dv90 - Dv10) / Dv50 and represents the particle size distribution of the positive electrode active material. Dv50 refers to a particle size at which the cumulative volume reaches 50% starting from the small particle size side in a volume-based particle size distribution of the positive electrode active material. Dv10 refers to a particle size at which the cumulative volume reaches 10% starting from the small particle size side in a volume-based particle size distribution of the positive electrode active material. Dv90 refers to a particle size at which the cumulative volume reaches 90% starting from the small particle size side in a volume-based particle size distribution of the positive electrode active material.

The numerical values of Dv50, Dv10, and Dv90 of the positive electrode active material are measured using the method specified in GB/T19077-2016, and the SPAN of the positive electrode active material is then calculated accordingly.

Maintaining the SPAN within a wide range can enhance the compaction density of the material and increase the discharge capacity of the battery.

In some embodiments, the positive electrode active material has a SPAN of 1.2-1.4. In some embodiments, the SPAN of the positive electrode active material may be selected from any one of the following ranges: 1.2-1.3, 1.2-1.4, and 1.3-1.4.

Maintaining the SPAN within a wide range results in the presence of particles of different sizes, preventing particle cracking during the battery cycling process and ensuring excellent cycle performance of the battery. Additionally, the synthesized precursor particles exhibit a non-uniform particle size, with particles closely packed together, which enhances lithium-ion transport speed and achieves the excellent rate capability of the battery.

By controlling the SPAN of the positive electrode active material within a suitable range, both the cycle performance and rate capability of the battery can be enhanced, thereby comprehensively improving the electrochemical performance of the battery.

In some embodiments, the (010) crystal plane area of the positive electrode active material is greater than or equal to 6 µm².

In some embodiments, the (010) crystal plane area of the positive electrode active material is greater than or equal to any one of 6 µm², 20 µm², 50 µm², 100 µm², 150 µm², 200 µm², 240 µm², and 250 µm².

The (010) crystal plane area of the positive electrode active material can be measured by any means known in the art. As an example, an X-ray powder diffractometer (XRD, model: Bruker D8 ADVANCE) is used to measure the (101) crystal plane area, with Cu Kα as the target material. The voltage and current are set to 40 kV/40 mA, the scanning angle range is 5° to 80°, the scanning step size is 0.00836°, and the time per step is 0.3 s.

The (010) crystal plane is the dominant plane for lithium-ion transport. The positive electrode active material with a larger (010) crystal plane area possesses more lithium-ion reaction active sites, thereby enabling the battery to exhibit excellent dynamics performance.

By controlling the (010) crystal plane area of the positive electrode active material to be greater than or equal to 6 µm², the battery achieves high discharge capacity and energy density, and excellent rate capability and cycle performance, thereby comprehensively improving the electrochemical performance of the battery.

In some embodiments, the primary particle of the positive electrode active material has a particle size of 0.1-0.8 µm. In some embodiments, the particle size of the primary particle of the positive electrode active material may be selected from any one of the following ranges: 0.1-0.2 µm, 0.1-0.3 µm, 0.1-0.4 µm, 0.1-0.5 µm, 0.1-0.6 µm, 0.1-0.7 µm, 0.1-0.8 µm, 0.2-0.3 µm, 0.2-0.4 µm, 0.2-0.5 µm, 0.2-0.6 µm, 0.2-0.7 µm, 0.2-0.8 µm, 0.3-0.4 µm, 0.3-0.5 µm, 0.3-0.6 µm, 0.3-0.7 µm, 0.3-0.8 µm, 0.4-0.5 µm, 0.4-0.6 µm, 0.4-0.7 µm, 0.4-0.8 µm, 0.5-0.6 µm, 0.5-0.7 µm, 0.5-0.8 µm, 0.6-0.7 µm, 0.6-0.8 µm, and 0.7-0.8 µm.

The term "primary particle" used herein refers to particles before the positive electrode active material is agglomerated.

The particle size of the primary particle of the positive electrode active material can be measured by any means known in the art. As an example, after imaging with a scanning electron microscope at a magnification of 500 times, 200 to 600 primary particles of the positive electrode active material that are morphologically intact and free from obstruction are randomly selected from the electron microscope image. The mean value of the longest diameters of the primary particles in the microscope image is recorded as the mean particle size.

By controlling the primary particle size of the positive electrode active material within a suitable range, the lithium-ion diffusion path is shortened, and the intercalation and deintercalation rates of lithium ions are accelerated. This enhances the discharge capacity and energy density of the battery while improving the rate capability of the battery.

In some embodiments, the primary particle of the positive electrode active material has a particle size of 0.15-0.3 µm. In some embodiments, the particle size of the primary particle of the positive electrode active material may be selected from any one of the following ranges: 0.15-0.2 µm, 0.15-0.3 µm, and 0.2-0.3 µm.

By controlling the particle size of the primary particle of the positive electrode active material within a suitable range, the primary particle exhibits excellent structural stability. During the cyclic charge and discharge process, with repeated deintercalation of lithium ions from and intercalation of lithium ions into the primary particle, the primary particle can still maintain structural integrity, reducing the phenomenon that transition metals inside the primary particle are detached from the primary particle and then dissolved into the electrolytic solution, thereby enhancing the cycle stability of the battery.

In some embodiments, the positive electrode active material has a specific capacity of 238 mAh/g-250 mAh/g.

The specific capacity of the positive electrode active material can be tested by any means known in the art. As an example, at 25 °C and normal pressure, a button battery is charged at a constant current rate of 0.02 C until the voltage reaches 3.5 V, followed by charging at a constant current rate of 0.1 C until the voltage reaches 4.3 V. The battery is then charged at a constant voltage of 4.3 V until the current drops to 0.05 C. The charge-specific capacity at this point is recorded as the first delithiation capacity. Subsequently, the battery is discharged at a constant current rate of 0.1 C until the voltage drops to 2.5 V, and the discharge-specific capacity at this point is recorded as the first lithiation capacity. The specific capacity of the positive electrode active material is the first lithiation capacity.

The present application further provides a preparation method for the positive electrode active material, including step (1) and step (2):
step (1): mixing a mixed source containing a nickel source and a cobalt source with a hard template agent, a complexing agent, and a precipitant, and performing a coprecipitation reaction to obtain a precursor, optionally, the mixed source containing an M source; and
step (2): calcining the precursor with a lithium source to obtain the positive electrode active material.

The chemical formula of the positive electrode active material is LiₐNiₓCo_{y}M_{1-x-y}O₂,
where M includes one or more of Mn, Al, B, Zr, Sr, Y, Sb, W, Ti, Mg, and Nb, 0.55 ≤ x ≤ 1.0, 0 ≤ y ≤ 0.45, 0.8 ≤ a ≤ 1.2, the positive electrode active material is of a hollow structure, and the inner diameter of the hollow structure is 0.3 µm-5 µm.

The term "coprecipitation reaction" used herein refers to a precipitation reaction that occurs at a certain temperature involving a metal solution, a precipitant, and a complexing agent.

In some embodiments, the M source is a manganese source or an antimony source.

In some embodiments, the preparation method for the positive electrode active material includes step (1) and step (2):
step (1): mixing a mixed source containing a nickel source and a cobalt source with a hard template agent, a complexing agent, and a precipitant, and performing a coprecipitation reaction to obtain a precursor; and
step (2): calcining the precursor with a lithium source to obtain the positive electrode active material.

In some embodiments, the nickel source includes one or more of nickel sulfate, nickel chloride, nickel nitrate, and nickel acetate.

In some embodiments, the cobalt source includes one or more of cobalt sulfate, cobalt chloride, cobalt nitrate, and cobalt acetate.

In some embodiments, the manganese source includes one or more of manganese sulfate, manganese chloride, manganese nitrate, and manganese acetate.

In some embodiments, the antimony source includes one or more of antimony sulfate, antimony chloride, antimony nitrate, and antimony acetate.

The surface of the hard template agent is coated with a dense layer of nickel-cobalt hydroxide through the coprecipitation reaction to form a compact core-shell structure, and the hard template agent is then removed by calcination to obtain the positive electrode active material with the hollow structure. The preparation method for the positive electrode active material described above is simple and the production cost is low. The prepared positive electrode active material features a hollow structure with an inner diameter of 0.3 µm-5 µm, facilitating the intercalation and deintercalation of lithium ions. Additionally, the hollow structure can buffer the volume change of the positive electrode active material during the charging and discharging processes, thereby stabilizing the structure and improving cycle performance.

In some embodiments, in the chemical formula LiₐNiₓCo_{y}M_{1-x-y}O₂, 0.9 ≤ x ≤ 1.0, 0 ≤ y ≤ 0.1, and 0.8 ≤ a ≤ 1.2.

In some embodiments, in the chemical formula LiₐNiₓCo_{y}M_{1-x-y}O₂, 0.95 ≤ x ≤ 0.995, 0 ≤ y ≤ 0.05, and 0.8 ≤ a ≤ 1.2.

In some embodiments, the hard template agent has an average diameter of 0.2 µm-3 µm. In some embodiments, the average diameter of the hard template agent may be selected from any one of the following ranges: 0.2 µm-1 µm, 0.2 µm-2 µm, 0.2 µm-3 µm, 1 µm-2 µm, 1 µm-3 µm, and 2 µm-3 µm.

In some embodiments, the hard template agent has an average diameter of 1 µm-3 µm. In some embodiments, the average diameter of the hard template agent may be selected from any one of the following ranges: 1 µm-2 µm, 1 µm-3 µm, or 2 µm-3 µm.

By controlling the average diameter of the hard template agent within a suitable range, and consequently regulating the inner diameter of the hollow structure in the positive electrode active material within a suitable range, both the lithium-ion diffusion path and the stability of the hollow structure can be optimized, thereby comprehensively improving the cycle performance and rate capability of the battery.

In some embodiments, the hard template agent includes one or more of carbon-nitrogen composite spheres, carbon spheres, phenolic resin microspheres, and melamine resin microspheres.

In some embodiments, the hard template agent includes phenolic resin spheres.

Suitable hard template agents exhibit excellent adsorption properties, and enable the formation of a dense layer of nickel-cobalt hydroxide on the surface of the hard template agents during the coprecipitation reaction, such that the positive electrode active material exhibits excellent structural performance, thereby enhancing the cycle performance and rate capability of the battery.

In some embodiments, the ratio of the weight of the hard template agent added in step (1) to the total weight of the nickel element and the cobalt element in the mixed source is 1:20 to 3:4.

In some embodiments, the ratio of the weight of the hard template agent added in step (1) to the total weight of the nickel element, the cobalt element, and the M element in the mixed source is 1:20 to 3:4.

In some embodiments, the ratio of the weight of the hard template agent added in step (1) to the total weight of the nickel element and the cobalt element in the mixed source is any value selected from 1:20, 1:15, 1:10, 1:5, 1:4, 2:4, and 3:4, or in a range defined by any two of these values.

In some embodiments, the ratio of the weight of the hard template agent added in step (1) to the total weight of the nickel element, the cobalt element, and the M element in the mixed source is any value selected from 1:20, 1:15, 1:10, 1:5, 1:4, 2:4, and 3:4, or in a range defined by any two of these values.

In some embodiments, the ratio of the weight of the hard template agent added in step (1) to the total weight of the nickel element, the cobalt element, and the manganese element in the mixed source is any value selected from 1:20, 1:15, 1:10, 1:5, 1:4, 2:4, and 3:4, or in a range defined by any two of these values.

By controlling the total weight of the hard template agent and the nickel element, the cobalt element, and/or the M element in the mixed source within a suitable range, the surface of the hard template agent can be stably and uniformly coated with the nickel-cobalt hydroxide layer, such that the hollow structure has a suitable inner diameter and outer wall thickness, and the positive electrode active material exhibits excellent structural performance, thereby improving the cycle performance and rate capability of the battery.

In some embodiments, the pH value of the coprecipitation reaction in step (1) is 9-13.

In some embodiments, the pH value is any value selected from 9, 10, 11, 12, and 13, or in a range defined by any two of these values.

A suitable pH value during the coprecipitation reaction ensures a smoother and more efficient reaction, and thus the surface of the hard template agent can be stably and uniformly coated with the nickel-cobalt hydroxide layer, such that the hollow structure has a suitable inner diameter and outer wall thickness, and the positive electrode active material exhibits excellent structural performance, thereby improving the cycle performance and rate capability of the battery.

In some embodiments, the reaction temperature of the coprecipitation reaction in step (1) is 60-85 °C.

In some embodiments, the reaction temperature is any value selected from 60 °C, 70 °C, 80 °C, and 85 °C, or in a range defined by any two of these values.

A suitable reaction temperature during the coprecipitation reaction ensures a smoother and more efficient reaction, and thus the surface of the hard template agent can be stably and uniformly coated with the nickel-cobalt hydroxide layer, such that the hollow structure has a suitable inner diameter and outer wall thickness, and the positive electrode active material exhibits excellent structural performance, thereby improving the cycle performance and rate capability of the battery.

In some embodiments, the reaction time of the coprecipitation reaction in step (1) is 5-20 h.

In some embodiments, the reaction time is any value selected from 5 h, 10 h, 15 h, and 20 h, or in a range defined by any two of these values.

A suitable reaction time for the coprecipitation reaction ensures a smoother and more efficient reaction, and thus the surface of the hard template agent can be stably and uniformly coated with the nickel-cobalt hydroxide layer, such that the hollow structure has a suitable inner diameter and outer wall thickness, and the positive electrode active material exhibits excellent structural performance, thereby improving the cycle performance and rate capability of the battery.

In some embodiments, the stirring speed of the coprecipitation reaction in step (1) is 200-900 rpm.

In some embodiments, the stirring speed of the reaction is any value selected from 200 rpm, 300 rpm, 400 rpm, 500 rpm, 600 rpm, 700 rpm, 800 rpm, and 900 rpm, or in a range defined by any two of these values.

A suitable stirring speed during the coprecipitation reaction ensures a smoother and more efficient reaction, and thus the surface of the hard template agent can be stably and uniformly coated with the nickel-cobalt hydroxide layer, such that the hollow structure has a suitable inner diameter and outer wall thickness, and the positive electrode active material exhibits excellent structural performance, thereby improving the cycle performance and rate capability of the battery.

In some embodiments, step (1) specifically includes:
preparing a hard template agent solution with a mass concentration of 1-10 g/L, a precipitant solution with a molar concentration of 1-2 mol/L, a complexing agent solution with a molar concentration of 4-8 mol/L, and a mixed salt solution containing a nickel element and a cobalt element with a total molar concentration of 1-2 mol/L, optionally, the mixed salt solution further containing an M element;
simultaneously adding the precipitant solution, the complexing agent solution, and the mixed salt solution into the hard template agent solution; and
performing the coprecipitation reaction to obtain the precursor.

In some embodiments, the precipitant includes one or more of sodium hydroxide, sodium carbonate, sodium bicarbonate, and ammonium bicarbonate, and is optionally ammonium bicarbonate.

In some embodiments, the complexing agent includes one or more of ammonia, lactic acid, and polyvinyl pyrrolidone, and is optionally ammonia.

In some embodiments, the mass concentration of the hard template agent solution is any value selected from 1 g/L, 2 g/L, 3 g/L, 4 g/L, 5 g/L, 6 g/L, 7 g/L, 8 g/L, 9 g/L, and 10 g/L, or in a range defined by any two of these values.

In some embodiments, the molar concentration of the precipitant solution is any value selected from 1 mol/L, 1.5 mol/L, and 2 mol/L, or in a range defined by any two of these values.

In some embodiments, the molar concentration of the complexing agent solution is any value selected from 4 mol/L, 5 mol/L, 6 mol/L, 7 mol/L, and 8 mol/L, or in a range defined by any two of these values.

In some embodiments, the molar concentration of the mixed salt is any value selected from 1 mol/L, 1.5 mol/L, and 2 mol/L, or in a range defined by any two of these values.

By controlling the hard template agent, the precipitant, the complexing agent, and the mixed salt solution within a suitable range, the coprecipitation reaction is performed more smoothly and efficiently. Moreover, during the coprecipitation reaction process, the nickel-cobalt hydroxide can precipitate more slowly, stably, and densely onto the surface of the hard template agent, forming a more uniform housing structure on the surface of the hard template agent, such that the hollow structure has a suitable inner diameter, outer wall thickness, and Dv50, and the positive electrode active material exhibits excellent structural performance, thereby enhancing the cycle performance and rate capability of the battery.

In some embodiments, the calcination in step (2) is performed at 700-900 °C.

The calcination in step (2) is performed for 6-18 h.

In some embodiments, the calcination temperature in step (2) is any value selected from 700 °C, 800 °C, and 900 °C, or in a range defined by any two of these values.

In some embodiments, the calcination time in step (2) is any value selected from 6 h, 7 h, 8 h, 9 h, 10 h, 11 h, 12 h, 13 h, 14 h, 15 h, 16 h, 17 h, and 18 h, or in a range defined by any two of these values.

By controlling the calcination temperature and calcination time within a suitable range, the hard template agent can be completely removed to form a hollow structure while ensuring the structural stability of the positive electrode active material. This results in a stable hollow structure for the positive electrode active material, thereby enhancing the cycle performance and rate capability of the battery.

### [Positive Electrode Plate]

The positive electrode plate includes a positive electrode current collector and a positive electrode film layer formed on at least a portion of the surface of the positive electrode current collector, where the positive electrode film layer includes the positive electrode active material according to some embodiments.

In some embodiments, the positive electrode film layer has a surface density of 24-46 mg/cm².

The coating surface density of the positive electrode film layer is determined by measuring the coating weight (g) and coating area (cm²) (with more than 14 sampling points) of the positive electrode film layer on one side. Specifically, the coating surface density of the positive electrode film layer is calculated as the coating weight (g) of the positive electrode film layer on one side divided by the coating area (cm²) of the positive electrode film layer.

The positive electrode film layer may further include a conductive agent to improve the conductive property of the positive electrode. The conductive agent is optionally one or more of super P, acetylene black, carbon black, Ketjen black, a carbon dot, a carbon nanotube, graphite, graphene, and a carbon nanofiber.

The positive electrode film layer may further include a binder to firmly bond the positive electrode active material and the optional conductive agent to the positive electrode current collector. The binder is optionally at least one of polyvinylidene fluoride (PVDF), polytetrafluoroethylene (PTFE), polyacrylic acid (PAA), polyvinyl alcohol (PVA), ethylenevinyl acetate copolymer (EVA), styrene-butadiene rubber (SBR), carboxymethyl cellulose (CMC), sodium alginate (SA), polymethacrylic acid (PMA), and carboxymethyl chitosan (CMCS).

The positive electrode current collector may be made of a conductive carbon plate, a metal foil, a carbon-coated metal foil, a porous metal plate, or a composite current collector. The conductive carbon material of the conductive carbon plate is optionally one or more of super P, carbon black, Ketjen black, a carbon dot, a carbon nanotube, graphite, graphene, and a carbon nanofiber. The metal materials of the metal foil, the carbon-coated metal foil, and the porous metal plate are each independently selected from at least one of copper, aluminum, nickel, and stainless steel. The composite current collector may be a composite current collector formed by combining a metal foil and a polymer base film.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

### [Negative Electrode Plate]

The negative electrode plate includes a negative electrode current collector and a negative electrode film layer disposed on at least one surface of the negative electrode current collector. The negative electrode film layer includes a negative electrode active material.

As an example, the negative electrode current collector has two surfaces opposite to each other in its own thickness direction, and the negative electrode film layer is disposed on any one or both of the two opposite surfaces of the negative electrode current collector.

In some embodiments, a metal foil or a composite current collector may be used as the negative electrode current collector. For example, as the metal foil, a copper foil may be used. The composite current collector may include a polymer material substrate and a metal layer formed on at least one surface of the polymer material substrate. The composite current collector can be fabricated by forming a metal material (copper, copper alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, a negative electrode active material for use in batteries known in the art may be used as the negative electrode active material. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other traditional materials that can be used as negative electrode materials for batteries may also be used. These negative electrode materials may be used alone or in combination of two or more.

In some embodiments, the negative electrode active material has a specific capacity of 600 mAh/g-2500 mAh/g.

In some embodiments, the negative electrode active material includes silicon(II) oxide.

In some embodiments, the mass content of the silicon(II) oxide is 20%-100%, optionally 50%-100%, based on the total mass of the negative electrode active material.

In some embodiments, the negative electrode film layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, a carbon dot, a carbon nanotube, graphene, and a carbon nanofiber.

In some embodiments, the negative electrode film layer further optionally includes other auxiliary agents, such as a thickener (e.g., sodium carboxymethylcellulose (CMC-Na)).

In some embodiments, the negative electrode plate can be prepared in the following manner: dispersing the components described above for preparing the negative electrode film layer, such as the negative electrode active material, the conductive agent, the binder, and any other components, in a solvent (such as deionized water) to form a negative electrode slurry; and coating the negative electrode current collector with the negative electrode slurry, and performing drying, cold pressing, and other processes, such that the negative electrode plate can be obtained.

### [Electrolyte]

The electrolyte conducts ions between the positive electrode plate and the negative electrode plate. The present application has no specific restrictions on the type of the electrolyte, which can be selected according to needs. For example, the electrolyte may be liquid, gel, or all solid.

In some embodiments, the electrolyte is an electrolytic solution. The electrolytic solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolytic solution further optionally includes an additive. The additive may include a negative electrode film-forming additive and a positive electrode film-forming additive, and may further include an additive capable of improving certain properties of the battery, such as an additive for improving the overcharge performance of the battery, and an additive for improving the high- or low-temperature performance of the battery.

### [Separation Film]

In some embodiments, the secondary battery further includes a separation film. The present application does not particularly limit the type of the separation film, and any porous-structure separation film known to have good chemical stability and mechanical stability may be selected and used.

In some embodiments, the separation film may be made of a material selected from at least one of glass fiber, non-woven fabric, polyethylene, polypropylene, and polyvinylidene fluoride. The separation film may be a single-layer film or a multi-layer composite film, and there is no particular limitation on this. When the separation film is a multi-layer composite film, the materials of the layers may be the same or different, and there is no particular limitation on this.

In some embodiments, the positive electrode plate, the negative electrode plate, and the separation film may be manufactured into an electrode assembly through a winding process or a stacking process.

In some embodiments, the secondary battery may include an outer packaging. The outer packaging can be used for packaging the electrode assembly and electrolyte described above.

In some embodiments, the outer packaging of the secondary battery may be a hard shell, such as a hard plastic shell, an aluminum shell, or a steel shell. The outer packaging of the secondary battery may also be a soft pack, such as a pouch-type soft pack. The soft pack may be made of plastic, and examples of the plastic may include polypropylene, polybutylene terephthalate, polybutylene succinate, and the like.

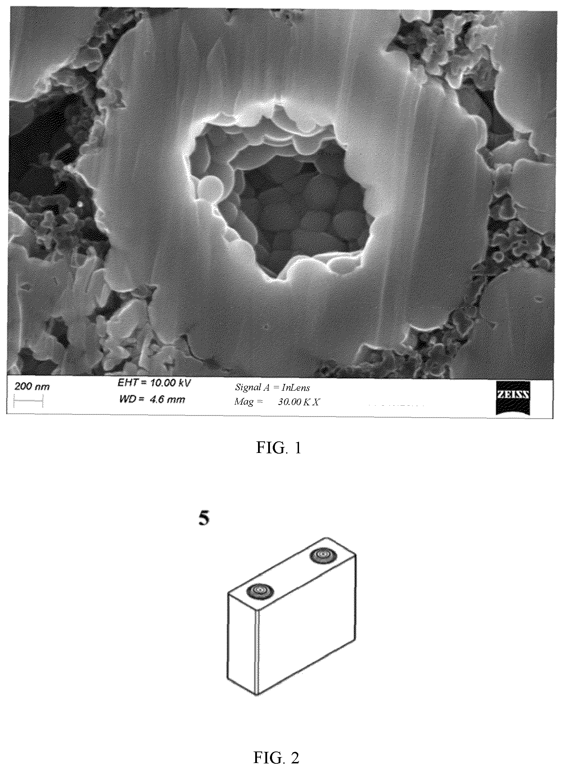

The present application does not particularly limit the shape of the secondary battery, and it may have a cylindrical shape, a prismatic shape, or any other shape. For example, FIG. 2 shows a secondary battery 5 having a prismatic structure as one example.

In some embodiments, the secondary battery has an energy density of 380-500 Wh/Kg.

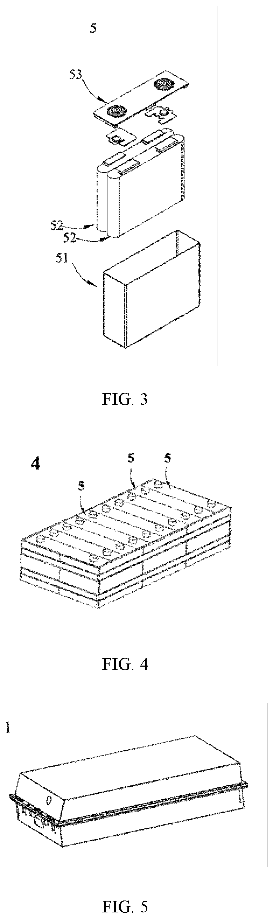

In some embodiments, referring to FIG. 3, the outer packaging may include a housing 51 and a cover plate 53. The housing 51 may include a bottom plate and a side plate connected to the bottom plate, and the bottom plate and the side plate define, in an enclosing manner, an accommodating cavity. The housing 51 is provided with an opening communicating with the accommodating cavity, and the cover plate 53 is capable of lidding the opening to close the accommodating cavity. The positive electrode plate, the negative electrode plate, and the separation film may be subjected to a winding process or a stacking process to form an electrode assembly 52. The electrode assembly 52 is packaged in the accommodating cavity. The electrolytic solution is infiltrated into the electrode assembly 52. The number of the electrode assembly 52 included in the secondary battery 5 may be one or more, and those skilled in the art can select the number according to specific and actual needs.

In some embodiments, the secondary battery may be assembled into a battery module. The number of secondary batteries included in the battery module may be one or more, and the specific number may be selected by those skilled in the art based on the use and capacity of the battery module.

FIG. 4 shows a battery module 4 as one example. Referring to FIG. 4, in the battery module 4, a plurality of secondary batteries 5 may be sequentially arranged in a length direction of the battery module 4. Certainly, the arrangement may also be in any other manner. Further, the plurality of secondary batteries 5 may be fixed by a fastener.

Optionally, the battery module 4 may further include a shell having an accommodating space in which the plurality of secondary batteries 5 are accommodated.

In some embodiments, the battery module described above may also be assembled into a battery pack. The number of battery modules included in the battery pack may be one or more, and the specific number may be selected by those skilled in the art based on the use and capacity of the battery pack.

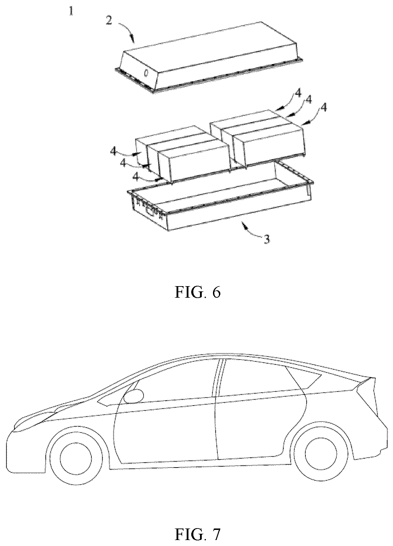

FIG. 5 and FIG. 6 show a battery pack 1 as one example. Referring to FIG. 5 and FIG. 6, the battery pack 1 may include a battery case and a plurality of battery modules 4 arranged in the battery case. The battery case includes an upper case body 2 and a lower case body 3. The upper case body 2 is capable of lidding the lower case body 3 to form a closed space for accommodating the battery modules 4. The plurality of battery modules 4 may be arranged in any manner in the battery case.

In addition, the present application further provides an electric device. The electric device includes at least one of the secondary battery, the battery module, or the battery pack provided in the present application. The secondary battery, the battery module, or the battery pack may be used as a power source for the electric device, and they may also be used as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

As the electric device, a secondary battery, a battery module, or a battery pack may be selected based on its use requirements.

FIG. 7 shows an electric device as one example. The electric device is a pure electric vehicle, a hybrid electric vehicle, a plug-in hybrid electric vehicle, or the like. To meet the requirements of the electric device for high power and high energy density of the secondary battery, the battery pack or the battery module may be used.

As another example, the device may be a mobile phone, a tablet computer, a laptop computer, or the like. The device is generally required to be light and thin, and a secondary battery can thus be used as a power source.

### Examples

Hereinafter, examples of the present application are described. The examples described below are illustrative and are merely used to explain the present application, and they should not be construed as limiting the present application. The examples without techniques or conditions specified therein are implemented according to techniques or conditions described in the literature in the art or according to product instructions. Reagents or instruments used herein without specified manufacturers are all commercially available conventional products.

### I. Preparation method

### Example 1

### 1) Preparation of positive electrode active materials

A nickel-cobalt-manganese solution in a molar ratio of nickel, cobalt, and manganese elements of 97:2:1 was prepared, with the concentration adjusted to 2 mol/L. The soluble raw materials of nickel, cobalt, and manganese were nickel sulfate, cobalt sulfate, and manganese sulfate, respectively. A 2 mol/L sodium hydroxide solution and a 6 mol/L ammonia solution were prepared. A carbon sphere dispersion with a mass concentration of 10 g/L was prepared and placed in a reaction kettle, followed by stirring at 800 rpm for 120 min to achieve uniform dispersion. The carbon spheres have a diameter of 0.25 µm.

The nickel-cobalt-manganese solution, the sodium hydroxide solution, and the ammonia solution described above were simultaneously added into the reaction kettle to perform a coprecipitation reaction, with the stirring speed controlled at 800 rpm, the temperature maintained at 60 °C, and the reaction time set to 6 h. The flow rates of the three solutions were adjusted as follows: the sodium hydroxide solution at 0.5 L/min, the ammonia solution at 0.7 L/min, and the nickel-cobalt-manganese solution at 0.2 L/min. The pH of the system was controlled at 10.8. The ratio of the weight of the carbon spheres to the total weight of nickel, cobalt, and manganese in the nickel-cobalt-manganese solution was 1:19.

After the coprecipitation reaction was completed, the reaction material overflowed into an aging kettle, certain washing additives were added thereto, and the mixture was stirred for 1 h. The material was then subjected to dehydration, water washing, secondary dehydration, drying, sieving, and demagnetization to obtain a positive electrode active material precursor with a carbon sphere at its core.

The positive electrode active material precursor and lithium carbonate were uniformly mixed in a certain proportion, with the molar ratio of Li to Me being 1.02, where Me represents the total molar content of the nickel element, cobalt element, and manganese element.

The uniformly mixed material was placed into an oxygen atmosphere furnace, with the heating rate set to 5 °C/min. The material was then held at 705 °C for 6 h under an atmosphere with an oxygen content of ≥ 98%, followed by cooling with the furnace.

The calcined material was subjected to double-roll crushing, ultracentrifugal grinding and crushing, and then sieved using a 400-mesh sieve to obtain the positive electrode active material.

### 2) Preparation of positive electrode plate

The positive electrode active material, the conductive agent carbon black, and the binder polyvinylidene fluoride (PVDF) described above were added to N-methylpyrrolidone in a mass ratio of 97:1:2, and the mixture was stirred for 3 h to obtain a positive electrode slurry. The positive electrode current collector aluminum foil was then evenly coated with the slurry, followed by drying, cold pressing, and cutting to obtain the positive electrode plate.

### 3) Preparation of negative electrode plate

Artificial graphite doped with silicon(II) oxide, conductive agent carbon black, carbon nanotubes (CNT), binder styrene-butadiene rubber (SBR), and thickener sodium hydroxymethylcellulose (CMC) were added into deionized water in a weight ratio of 94.5:1:0.375:2.8:1.325, where the mass percentage of silicon(II) oxide was 70% based on the total mass of the artificial graphite and silicon(II) oxide. The mixture was stirred for 0.5 to 6 h to obtain a negative electrode slurry. The negative electrode current collector copper foil was then evenly coated with the negative electrode slurry in layers, followed by drying, cold pressing, and cutting to obtain the negative electrode plate.

### 4) Electrolytic solution

In a glove box under argon atmosphere (H₂O < 0.1 ppm and O₂ < 0.1 ppm), lithium salts LiPF₆ and LIFSI were dissolved in an organic solvent mixture of ethylene carbonate, ethyl methyl carbonate, diethyl carbonate, and fluoroethylene carbonate (in a volume ratio of 1:1:1:1). The mixture was stirred evenly to obtain an electrolytic solution with a lithium salt concentration of 1 mol/L.

### 5) Separation film

A polypropylene film was used as the base film, on which a 1-micron layer of aluminum oxide and a 1-micron layer of polyvinylidene fluoride were applied.

### 6) Preparation of battery

The positive electrode plate, the separation film, and the negative electrode plate were stacked in sequence, with the separation film placed between the positive electrode plate and the negative electrode plate to fulfill the function of separation. The stack was then wound to obtain a bare cell, and the tabs were welded to the bare cell. The bare cell was placed in an aluminum shell, which was then baked at 80 °C to remove water, injected with an electrolytic solution, and sealed to obtain an uncharged battery. The uncharged battery was then sequentially subjected to processes including standing, hot and cold pressing, formation, shaping, capacity testing, and the like, to obtain the lithium battery product of Example 1.

### Examples 2 to 24

The batteries of Examples 2-24 were prepared using a method similar to that of Example 1 except that the components of the positive electrode active material and the preparation method therefor were adjusted. The specific parameters are shown in Table 1.

### Comparative Example 1

The battery of Comparative Example 1 was prepared using a method similar to that of Example 1 except that no carbon sphere hard template agent was added during the coprecipitation reaction. The specific preparation method is as follows.

### Comparative Examples 2-3

The batteries of Comparative Examples 2-3 were prepared using a method similar to that of Example 1 except that the parameters of the preparation method for the positive electrode active material were adjusted. The specific parameters are shown in Table 1.

### Comparative Example 4

The battery of Comparative Example 4 was prepared using a method similar to that of Example 21 except that no carbon sphere hard template agent was added during the reaction. The specific parameters are shown in Table 1.

### Comparative Examples 5-6

The batteries of Comparative Examples 5 to 6 were prepared using a method similar to that of Example 21 except that the parameters of the preparation method for the positive electrode active material were adjusted. The specific parameters are shown in Table 1.

### II. Performance test

### 1. Performance test of positive electrode active material

### 1) Inner diameter test of hollow structure

A conductive adhesive was affixed to the sample stage, and a powder sample of the positive electrode active material in the examples and comparative examples was evenly spread onto the conductive adhesive. The unattached powder was removed using an air blower, followed by gold sputtering. The particles of the powder sample were then cross-sectioned using argon plasma. A scanning electron microscope (SEM) image of the powder sample was obtained using a scanning electron microscope (e.g., ZEISS Sigma 300) under an accelerating voltage of 10 kV and an emission current of 10 mA. The inner diameter of the hollow structure was measured based on the SEM image. At least three samples were measured, with at least 50 pieces of data measured for each sample, and the mean value was taken as the inner diameter of the hollow structure of the sample.

### 2) Porosity test

The porosity of the positive electrode active material can be tested by any means known in the art. As an example, the porosity can be measured by a gas displacement method according to GB/T24586. Porosity = (V1 - V2) / V1 × 100%, where V1 is the apparent volume of the sample, and V2 is the true volume of the sample.

### 3) Outer wall thickness of hollow structure

A conductive adhesive was affixed to the sample stage, and a powder sample of the positive electrode active material in the examples and comparative examples was evenly spread onto the conductive adhesive. The unattached powder was removed using an air blower, followed by gold sputtering. The particles of the powder sample were then cross-sectioned using argon plasma. A scanning electron microscope (SEM) image of the powder sample was obtained using a scanning electron microscope (e.g., ZEISS Sigma 300) under an accelerating voltage of 10 kV and an emission current of 10 mA. The outer wall thickness of the hollow structure was measured based on the SEM image. At least three samples were measured, with at least 50 pieces of data measured for each sample, and the mean value was taken as the outer wall thickness of the hollow structure of the sample.

### 4) Specific surface area test

Reference may be made to GB/T 19587-2017 *Determination of the specific surface area of solids by gas adsorption using the BET method.* The TriStar II 3020 device was used for measurement. The positive electrode active material was dispersed in a dispersant (ethanol) and subjected to ultrasonic treatment for 30 min. The obtained material was then placed in a vacuum drying oven for drying, and finally, the specific surface area of the positive electrode active material was measured using a specific surface area analyzer.

### 4) Dv50 test

According to GB/T 19077-2016 *Particle size analysis-Laser diffraction methods*, 0.1-0.13 g of positive electrode active material sample to be tested was weighed out in a 50 mL beaker, followed by the addition of 5 g of absolute ethanol. A stirring bar of about 2.5 mm in size was then placed in the beaker, and the mixture was then sealed with plastic wrap. After ultrasonic treatment for 5 min, the sample was transferred to a magnetic stirrer and stirred at 500 rpm for 20 min or more. Two samples were taken from each batch of products for testing. The test was performed using a Mastersizer 2000E laser particle size analyzer produced by Malvern Instruments Ltd., UK. Dv50 is the particle size at which the cumulative volume distribution of the secondary particle of the positive electrode active material reaches 50%.

### 5) SPAN test

According to GB/T 19077-2016 *Particle size analysis-Laser diffraction methods*, 0.1-0.13 g of positive electrode active material sample to be tested was weighed out in a 50 mL beaker, followed by the addition of 5 g of absolute ethanol. A stirring bar of about 2.5 mm in size was then placed in the beaker, and the mixture was then sealed with plastic wrap. After ultrasonic treatment for 5 min, the sample was transferred to a magnetic stirrer and stirred at 500 rpm for 20 min or more. Two samples were taken from each batch of products for testing. The test was performed using a Mastersizer 2000E laser particle size analyzer produced by Malvern Instruments Ltd., UK. SPAN = (Dv90 - Dv10) / Dv50, where Dv90 of the secondary particle is the particle size at which the cumulative volume distribution of the secondary particle of the positive electrode active material reaches 90%, Dv50 of the secondary particle is the particle size at which the cumulative volume distribution of the secondary particle of the positive electrode active material reaches 50%, Dv10 of the secondary particle is the particle size at which the cumulative volume distribution of the secondary particle of the positive electrode active material reaches 10%.

### 6) (101) Crystal plane area

An X-ray powder diffractometer (XRD, model: Bruker D8 ADVANCE) was used to measure the (101) crystal plane area, with Cu Kα as the target material. The voltage and current were set to 40 kV/40 mA, the scanning angle range was 5° to 80°, the scanning step size was 0.00836°, and the time per step was 0.3 s.

### 7) Test method for particle size of primary particle

After imaging with a scanning electron microscope (ZEISS Sigma-02-33, Germany) at a magnification of 500 times, 200 to 600 primary particles of the positive electrode active material that were morphologically intact and free from obstruction were randomly selected from the electron microscope image. The mean value of the longest diameters of the primary particles in the microscope image was recorded as the mean particle size.

### 2. Battery performance test

### 1) Discharge capacity test

The battery cell was allowed to stand at 25 °C for 2 h to ensure that the temperature of the battery cell was 25 °C. At 25 °C, the battery cell was charged at 0.1 C to a charge cut-off voltage of 4.3 V, and constant-voltage charging was continued at the charge cut-off voltage until the current reached 0.02 C, at which point charging was terminated (where C represents the rated capacity of the battery cell). The battery cell was allowed to stand at 25 °C for 0.5 h. At 25 °C, the battery cell was discharged at 0.1 C to a discharge cut-off voltage of 2.5 V, and the total discharge capacity of the battery cell was recorded as C0.

### 2) Energy density test

Capacity test of the battery cell: The battery cell was allowed to stand at 25 °C for 2 h to ensure that the temperature of the battery cell was 25 °C. At 25 °C, the battery cell was charged at 0.1 C to a charge cut-off voltage, and constant-voltage charging was continued at the charge cut-off voltage until the current reached 0.05 C, at which point charging was terminated (where C represents the rated capacity of the battery cell). The battery cell was allowed to stand at 25 °C for 1 h. At 25 °C, the battery cell was discharged at 0.1 C to a discharge cut-off voltage, and the total discharge capacity and total discharge energy of the battery cell were recorded as C0 and E0, respectively.

Battery cell weight measurement: The battery cell was placed on an electronic balance until the weight stabilized, and the battery cell weight M0 was recorded.

Energy density calculation: The energy density of the battery cell was calculated as the battery cell discharge energy E0divided by the battery cell weight M0.

### 3) 10 to 80% SOC charging time test

Voltage calibration: The stacked three-electrode battery cell with the same design was left to stand at 25 °C for 30 min. The battery cell was then charged at 0.33 C to the charge cut-off voltage at 25 °C, followed by constant voltage charging at the charge cut-off voltage until the current reached 0.05 C, at which point charging was terminated (where C represents the rated capacity of the battery cell). After the battery cell was left to stand at 25 °C for 1 h, the battery cell was discharged at 0.33 C to the discharge cut-off voltage at 25 °C, and the total discharge capacity C1 of the battery cell was recorded. The battery cell was then left to stand at 25 °C for another 1 h.

Charging test: The stacked three-electrode battery cell was left to stand at 25 °C for 30 min. The battery cell was then discharged at 0.33 C1 DC to the discharge cut-off voltage and left to stand for 5 min. Subsequently, the battery cell was charged at xC1 CC to the charge cut-off voltage, with the anode potential monitored using the three-electrode system. When the anode potential reached 0 V, the next step was initiated. This process was repeated 9 times, with x values set sequentially as 5, 4, 4.5, 3, 2, 1, 0.8, 0.5, and 0.33. The corresponding x value and charge capacity Cx were recorded when the anode potential reached 0 V.

### 4) Capacity retention rate test of the battery after cycling

The secondary batteries prepared in the examples and comparative examples were charged at a constant current of 0.5 C to a charge cut-off voltage of 4.25 V, followed by constant voltage charging until the current dropped to ≤ 0.05 C. The batteries were then left to stand for 5 min, discharged at a constant current of 0.33 C to a discharge cut-off voltage of 2 V, and left to stand for another 5 min. This process constituted one charge-discharge cycle. The battery was subjected to a charge-discharge cycle test using this method until the capacity of the battery declined to 80%. The number of cycles at this time was the cycle life of the battery at 25 °C.

### III. Analysis of test results of examples and comparative examples

The batteries of the examples and comparative examples were prepared according to the methods described above, and various performance parameters were measured. The results are shown in Table 1, Table 2, and Table 3 below.

**Table 1**

| No. | Coprecipitation | | | | | | Calcination | |
|---|---|---|---|---|---|---|---|---|
| | Diameter of hard template agent/µm | Ratio of weight of hard template agent to total weight of nickel element, cobalt element, and M element | pH | Temperature/ °C | Time/h | Stirring speed/rmp | Temperature/°C | Time/h |
| Example 1 | 0.25 | 1:19 | 10.8 | 60 | 6 | 800 | 705 | 6 |
| Example 2 | 1.75 | 5:15 | 11.2 | 65 | 12 | 750 | 720 | 7 |
| Example 3 | 2.2 | 6:14 | 11.4 | 70 | 14 | 700 | 730 | 8 |
| Example 4 | 2.35 | 8:12 | 11.8 | 75 | 18 | 650 | 750 | 10 |
| Example 5 | 0.6 | 8:12 | 10.8 | 60 | 6 | 800 | 705 | 6 |
| Example 6 | 0.9 | 3:17 | 11 | 63 | 10 | 760 | 715 | 7.5 |
| Example 7 | 2.35 | 8:12 | 11.8 | 75 | 18 | 650 | 750 | 10 |
| Example 8 | 2.5 | 4:16 | 12.4 | 78 | 19 | 670 | 735 | 11 |
| Example 9 | 2.35 | 8:12 | 11.2 | 68 | 12 | 610 | 720 | 10 |
| Example 10 | 2.35 | 8:12 | 11.4 | 70 | 14 | 620 | 730 | 10 |
| Example 11 | 2.35 | 8:12 | 11.6 | 73 | 15 | 630 | 740 | 10 |
| Example 12 | 2.35 | 8:12 | 11.2 | 75 | 18 | 650 | 750 | 10 |
| Example 13 | 2.35 | 8:12 | 11.3 | 76 | 18 | 680 | 753 | 10 |
| Example 14 | 2.35 | 8:12 | 11.2 | 78 | 18 | 670 | 755 | 10 |
| Example 15 | 2.35 | 8:12 | 11.5 | 79 | 18 | 660 | 758 | 10 |
| Example 16 | 2.35 | 8:12 | 11.6 | 81 | 18 | 690 | 761 | 10 |
| Example 17 | 2.35 | 8:12 | 11.8 | 82 | 18 | 750 | 763 | 10 |
| Example 18 | 2.35 | 8:12 | 11.9 | 80 | 18 | 720 | 765 | 10 |
| Example 19 | 2.35 | 8:12 | 11.7 | 83 | 18 | 710 | 768 | 10 |
| Example 20 | 2.35 | 8:12 | 12 | 82 | 18 | 705 | 769 | 10 |
| Example 21 | 2.35 | 8:12 | 11.8 | 75 | 18 | 650 | 750 | 10 |
| Example 22 | 2.35 | 8:12 | 12.8 | 75 | 16 | 680 | 750 | 10 |
| Example 23 | 2.35 | 8:12 | 12.2 | 75 | 15 | 690 | 750 | 10 |
| Example 24 | 2.35 | 8:12 | 11.8 | 75 | 18 | 650 | 750 | 10 |
| Comparative Example 1 | / | / | 10.8 | 60 | 6 | 800 | 705 | 6 |
| Comparative Example 2 | 0.15 | 0.5:19.5 | 10.9 | 62 | 6 | 850 | 705 | 6 |
| Comparative Example 3 | 7 | 8:12 | 11.8 | 75 | 18 | 650 | 750 | 10 |
| Comparative Example 4 | / | / | 11.8 | 75 | 18 | 650 | 750 | 10 |
| Comparative Example 5 | 0.1 | 1:19 | 12.2 | 70 | 16 | 680 | 750 | 10 |
| Comparative Example 6 | 7 | 2:18 | 11.8 | 74 | 18 | 640 | 750 | 10 |

**Table 2**

| No. | Positive electrode active material | | | | | | | | | |
|---|---|---|---|---|---|---|---|---|---|---|
| | Chemical formula | Inner diameter d1 (µm) | Dv50 / (d1 - d2) | Outer wall thickness d2 (µm) | Dv50 (µm) | Porosity | Specific surface area/m²/g | SPAN | (010) crystal plane area (µm²) | Particle size of primary particle (µm) |
| Example 1 | LiNi_{0.97}CO_{0.02}Mn_{0.01}O₂ | 0.3 | 1.08 | 8 | 9 | 1% | 0.4 | 1.23 | 20 | 0.8 |
| Example 2 | LiNi_{0.97}CO_{0.02}Mn_{0.01}O₂ | 2 | 1.13 | 6 | 9 | 6% | 0.9 | 1.23 | 180 | 0.5 |
| Example 3 | LiNi_{0.97}CO_{0.02}Mn_{0.01}O₂ | 2.5 | 1.13 | 5.5 | 9 | 8% | 1.1 | 1.23 | 200 | 0.4 |
| Example 4 | LiNi_{0.97}CO_{0.02}Mn_{0.01}O₂ | 3 | 1.29 | 4 | 9 | 10% | 1.4 | 1.23 | 240 | 0.2 |
| Example 5 | LiNi_{0.97}CO_{0.02}Mn_{0.01}O₂ | 0.5 | 1.06 | 8 | 9 | 0.50% | 0.5 | 1.23 | 30 | 0.25 |
| Example 6 | LiNi_{0.97}CO_{0.02}Mn_{0.01}O₂ | 1.6 | 1.07 | 6.8 | 9 | 3% | 1.26 | 1.23 | 234 | 0.35 |
| Example 7 | LiNi_{0.97}CO_{0.02}Mn_{0.01}O₂ | 3 | 1.29 | 4 | 9 | 9% | 1.4 | 1.23 | 240 | 0.2 |
| Example 8 | LiNi_{0.97}CO_{0.02}Mn_{0.01}O₂ | 5 | 1.13 | 3 | 9 | 15% | 1.8 | 1.23 | 252 | 0.24 |
| Example 9 | LiNi_{0.97}CO_{0.02}Mn_{0.01}O₂ | 3 | 0.43 | 4 | 3 | 10% | 0.7 | 0.78 | 210 | 0.2 |
| Example 10 | LiNi_{0.97}CO_{0.02}Mn_{0.01}O₂ | 3 | 0.71 | 4 | 5 | 10% | 0.9 | 0.9 | 220 | 0.2 |
| Example 11 | LiNi_{0.97}CO_{0.02}Mn_{0.01}O₂ | 3 | 1.43 | 4 | 10 | 10% | 1.25 | 1.12 | 230 | 0.2 |
| Example 12 | LiNi_{0.97}CO_{0.02}Mn_{0.01}O₂ | 3 | 214 | 4 | 15 | 10% | 1.4 | 1.23 | 240 | 0.2 |
| Example 13 | LiNi_{0.97}CO_{0.02}Mn_{0.01}O₂ | 3 | 1.29 | 4 | 9 | 10% | 1.4 | 0.4 | 220 | 0.2 |
| Example 14 | LiNi_{0.97}CO_{0.02}Mn_{0.01}O₂ | 3 | 1.29 | 4 | 9 | 10% | 1.4 | 0.7 | 227 | 0.2 |
| Example 15 | LiNi_{0.97}CO_{0.02}Mn_{0.01}O₂ | 3 | 1.29 | 4 | 9 | 10% | 1.4 | 1.4 | 235 | 0.2 |
| Example 16 | LiNi_{0.97}CO_{0.02}Mn_{0.01}O₂ | 3 | 1.29 | 4 | 9 | 10% | 1.4 | 2 | 240 | 0.2 |
| Example 17 | LiNi_{0.97}CO_{0.02}Mn_{0.01}O₂ | 3 | 1.29 | 4 | 9 | 10% | 1.4 | 1.2 | 242 | 0.1 |
| Example 18 | LiNi_{0.97}CO_{0.02}Mn_{0.01}O₂ | 3 | 1.29 | 4 | 9 | 10% | 1.4 | 1.2 | 242 | 0.15 |
| Example 19 | LiNi_{0.97}CO_{0.02}Mn_{0.01}O₂ | 3 | 1.29 | 4 | 9 | 10% | 1.4 | 1.2 | 242 | 0.5 |
| Example 20 | LiNi_{0.97}CO_{0.02}Mn_{0.01}O₂ | 3 | 1.29 | 4 | 9 | 10% | 1.4 | 1.2 | 242 | 0.9 |
| Example 21 | LiNi_{0.97}CO_{0.03}O₂ | 3 | 1.29 | 4 | 9 | 10% | 1.4 | 1.25 | 240 | 0.22 |
| Example 22 | LiNi_{0.995}Co_{0.004}Mn_{0.001}O₂ | 3 | 1.29 | 4 | 9 | 10% | 1.6 | 1.25 | 241 | 0.18 |
| Example 23 | LiNi_{0.95}Co_{0.04}Mn_{0.01}O₂ | 3 | 1.29 | 4 | 9 | 10% | 1.4 | 1.25 | 241 | 0.2 |
| Example 24 | LiNi_{0.97}C0_{0.02}Sb_{0.01}O₂ | 3 | 1.29 | 4 | 9 | 10% | 1.4 | 1.2 | 242 | 0.2 |
| Comparative Example 1 | LiNi_{0.97}CO_{0.02}Mn_{0.01}O₂ | / | / | / | 9 | / | 1.4 | 1.23 | 220 | 0.2 |
| Comparative Example 2 | LiNi_{0.97}CO_{0.02}Mn_{0.01}O₂ | 0.1 | 1.11 | 8 | 9 | 0.30% | 0.45 | 1.23 | 18 | 0.8 |
| Comparative Example 3 | LiNi_{0.97}CO_{0.02}Mn_{0.01}O₂ | 6 | 0.9 | 4 | 9 | 10% | 1.4 | 1.23 | 240 | 0.2 |
| Comparative Example 4 | LiNi_{0.97}CO_{0.03}O₂ | / | / | / | 9 | / | 0.4 | 1.23 | 240 | 0.2 |
| Comparative Example 5 | LiNi_{0.97}CO_{0.03}O₂ | 0.1 | 2.20 | 4 | 9 | 0.50% | 1.4 | 1.23 | 32 | 0.2 |
| Comparative Example 6 | LiNi_{0.97}CO_{0.03}O₂ | 6 | 0.9 | 4 | 9 | 0.7% | 1.4 | 1.23 | 60 | 0.2 |

**Table 3**

| No. | Battery performance | | | |
|---|---|---|---|---|
| | Discharge capacity (mAh) | Energy Density (Wh/kg) | Charging time (min) | Number of cycles |
| Example 1 | 241 | 413 | 18 | 800 |
| Example 2 | 247 | 421 | 15 | 1000 |
| Example 3 | 249 | 423 | 10 | 1500 |
| Example 4 | 251 | 428 | 9 | 1200 |
| Example 5 | 243 | 420 | 16 | 950 |
| Example 6 | 250 | 426 | 10 | 1480 |
| Example 7 | 251 | 428 | 9 | 1500 |
| Example 8 | 252 | 429 | 9 | 1000 |
| Example 9 | 248 | 425 | 12 | 1350 |
| Example 10 | 249 | 426 | 11 | 1400 |
| Example 11 | 250 | 427 | 10 | 1550 |
| Example 12 | 251 | 428 | 9 | 1500 |
| Example 13 | 246 | 427 | 10 | 1250 |
| Example 14 | 247 | 427 | 10 | 1350 |
| Example 15 | 250 | 427 | 10 | 1500 |
| Example 16 | 250 | 427 | 10 | 1250 |
| Example 17 | 251 | 421 | 9 | 1050 |
| Example 18 | 251 | 421 | 10 | 1500 |
| Example 19 | 250 | 420 | 11 | 1480 |
| Example 20 | 249 | 419 | 12 | 1150 |
| Example 21 | 250 | 420 | 10 | 1000 |
| Example 22 | 252 | 425 | 16 | 1100 |
| Example 23 | 243 | 416 | 15 | 1250 |
| Example 24 | 247 | 418 | 14 | 1100 |
| Comparative Example 1 | 232 | 400 | 25 | 500 |
| Comparative Example 2 | 236 | 405 | 22 | 550 |
| Comparative Example 3 | 251 | 426 | 9.5 | 700 |
| Comparative Example 4 | 230 | 396 | 28 | 395 |
| Comparative Example 5 | 228 | 397 | 26 | 300 |
| Comparative Example 6 | 229 | 399 | 24 | 380 |

From the above results, the chemical formula of the positive electrode active material in Examples 1-24 was any one of LiNi_{0.97}CO_{0.02}Mn_{0.01}O₂, LiNi_{0.97}CO_{0.03}O₂, LiNi_{0.995}CO_{0.004}Mn_{0.01}O₂, LiNi_{0.95}CO_{0.04}Mn_{0.01}O₂, and LiNi_{0.97}CO_{0.02}Sb_{0.01}O₂.

The morphology of the positive electrode active material in Example 4 was analyzed using a scanning electron microscope (SEM). As shown in FIG. 1, the test results indicated that the positive electrode active material had a hollow structure. The positive electrode active materials of Examples 1-24 had a hollow structure, and the inner diameter d1 of the hollow structure was 0.3 µm-5 µm.

From the comparison between Examples 1-20 and Comparative Example 1, and between Example 21 and Comparative Example 4, it can be seen that the positive electrode active material had a hollow structure, which can enhance the discharge capacity and energy density of the battery, shorten the charging time of the battery, and enhance the rate capability and cycle performance of the battery.

From the comparison between Examples 1-20 and Comparative Examples 2-3, and between Example 21 and Comparative Examples 5-6, it can be seen that the inner diameter d1 of the hollow structure was 0.3 µm-5 µm, which can enhance the cycle performance of the battery while maintaining high discharge capacity and energy density, and excellent rate capability of the battery, thereby comprehensively improving the electrochemical performance of the battery.

From the comparison of Examples 2-4 and 6-20 with Examples 1 and 5, it can be seen that the inner diameter d1 of the hollow structure was 1.5 µm-5 µm, which can further enhance the cycle performance and rate capability of the battery.

From the comparison of Examples 4, 7, and 11-16 with Examples 9-10, it can be seen that by controlling the Dv50 of the positive electrode active material as well as the inner diameter d1 and outer wall thickness d2 of the hollow structure to satisfy 1 ≤ Dv50 / (d1 + d2) ≤ 4, the energy density of the battery can be enhanced, and the rate capability of the battery can be improved.

According to Examples 1-24, it can be seen that the outer wall thickness d2 of the hollow structure was 3 µm-10 µm, enabling the battery to achieve high discharge capacity and energy density, and excellent rate capability and cycle performance, thereby comprehensively improving the electrochemical performance of the battery. From the comparison of Examples 2-4 and 6-20 with Examples 1 and 5, it can be seen that the outer wall thickness d2 of the hollow structure was 3 µm-7 µm, which can further enhance the cycle performance and rate capability of the battery.

From the comparison of Examples 4, 7, and 10-16 with Example 9, it can be seen that the Dv50 of the positive electrode active material was 5 µm-15 µm, which can enhance the energy density and rate capability of the battery. From the comparison of Examples 4, 7, and 11-16 with Examples 9-10, it can be seen that the Dv50 of the positive electrode active material was 8 µm-10 µm, which can further enhance the energy density and rate capability of the battery.

According to Examples 1-24, it can be seen that the porosity of the positive electrode active material was 0-20%, enabling the battery to achieve high discharge capacity and energy density, and excellent rate capability and cycle performance, thereby comprehensively improving the electrochemical performance of the battery. From the comparison of Examples 2-4, 6-8, and 13-16 with Examples 1-5, it can be seen that the porosity of the positive electrode active material was 2%-15%, which can enhance the discharge capacity and energy density of the battery while improving the rate capability and cycle performance of the battery.

According to Examples 1 to 24, it can be seen that the specific surface area of the positive electrode active material was 0.4 m²/g-1.4 m²/g, enabling the battery to achieve high discharge capacity and energy density, and excellent rate capability and cycle performance, thereby comprehensively improving the electrochemical performance of the battery.

From the comparison of Examples 4 and 15-16 with Examples 13-14, it can be seen that the SPAN of the positive electrode active material was 1-1.5, which can enhance the discharge capacity of the battery. From the comparison of Examples 4 and 15 with Examples 13-14 and 16, it can be seen that the SPAN of the positive electrode active material was 1.2-1.4, which can enhance both the cycle performance and the rate capability of the battery, thereby comprehensively improving the electrochemical performance of the battery.

According to Examples 1 to 24, it can be seen that the (010) crystal plane area of the positive electrode active material was greater than or equal to 6 µm², enabling the battery to achieve high discharge capacity and energy density, and excellent rate capability and cycle performance, thereby comprehensively improving the electrochemical performance of the battery.

From the comparison between Examples 17-19 and Example 20, it can be seen that the particle size of the primary particle of the positive electrode active material was 0.1-0.8 µm, which can enhance the discharge capacity and energy density of the battery while improving the rate capability of the battery. From the comparison between Examples 18-19 and Examples 17-20, it can be seen that the particle size of the primary particle of the positive electrode active material was 0.15-0.3 µm, which can improve the cycle performance of the battery.

## Claims

1. A positive electrode active material, wherein a chemical formula of the positive electrode active material is LiₐNiₓCo_{y}M_{1-x-y}O₂,
wherein M comprises one or more of Mn, Al, B, Zr, Sr, Y, Sb, W, Ti, Mg, and Nb, 0.55 ≤ x ≤ 1.0, 0 ≤ y ≤ 0.45, 0.8 ≤ a ≤ 1.2, the positive electrode active material is of a hollow structure, and an inner diameter d1 of the hollow structure is 0.3 µm-5 µm.

2. The positive electrode active material according to claim 1, wherein in the chemical formula LiₐNiₓCo_{y}M_{1-x-y}O₂, 0.9 ≤ x ≤ 1.0, 0 ≤ y ≤ 0.1, and 0.8 ≤ a ≤ 1.2, and optionally, 0.95 ≤ x ≤ 0.995, 0 ≤ y ≤ 0.05, and 0.8 ≤ a ≤ 1.2.

3. The positive electrode active material according to claim 1 or 2, wherein the inner diameter d1 of the hollow structure is 1.5 µm-5 µm.

4. The positive electrode active material according to any one of claims 1 to 3, wherein the positive electrode active material satisfies the following relationship: 1 ≤ Dv50 / (d1 + d2) ≤ 4,
wherein d1 µm is the inner diameter of the hollow structure, d2 µm is an outer wall thickness of the hollow structure, and Dv50 µm is Dv50 of the positive electrode active material.

5. The positive electrode active material according to any one of claims 1 to 4, wherein the outer wall thickness d2 of the hollow structure is 3 µm to 10 µm, optionally 3 µm to 7 µm.

6. The positive electrode active material according to any one of claims 1 to 5, wherein the positive electrode active material has a Dv50 of 5 µm to 15 µm, optionally 8 µm to 10 µm.

7. The positive electrode active material according to any one of claims 1 to 6, wherein the positive electrode active material has a porosity of 0-20%, optionally 2-15%.

8. The positive electrode active material according to any one of claims 1 to 7, wherein the positive electrode active material has a specific surface area of 0.4 m²/g-1.4 m²/g.

9. The positive electrode active material according to any one of claims 1 to 8, wherein the positive electrode active material has a SPAN of 1-1.5, optionally 1.2-1.4.

10. The positive electrode active material according to any one of claims 1 to 9, wherein a (010) crystal plane area of the positive electrode active material is greater than or equal to 6 µm².

11. The positive electrode active material according to any one of claims 1 to 10, wherein a primary particle of the positive electrode active material has a particle size of 0.1-0.8 µm, optionally 0.15-0.3 µm.

12. A preparation method for a positive electrode active material, comprising step (1) and step (2):
step (1): mixing a mixed source containing a nickel source and a cobalt source with a hard template agent, a complexing agent, and a precipitant, and performing a coprecipitation reaction to obtain a precursor, optionally, the mixed source containing an M source; and
step (2): calcining the precursor with a lithium source to obtain the positive electrode active material,
a chemical formula of the positive electrode active material being LiₐNiₓCo_{y}M_{1-x-y}O₂,
wherein M comprises one or more of Mn, Al, B, Zr, Sr, Y, Sb, W, Ti, Mg, and Nb, 0.55 ≤ x ≤ 1.0, 0 ≤ y ≤ 0.45, 0.8 ≤ a ≤ 1.2, the positive electrode active material is of a hollow structure, and an inner diameter of the hollow structure is 0.3 µm-5 µm.

13. The preparation method according to claim 12, wherein in the chemical formula LiₐNiₓCo_{y}M_{1-x-y}O₂, 0.9 ≤ x ≤ 1.0, 0 < y ≤ 0.1, and 0.8 ≤ a ≤ 1.2, and optionally, 0.95 ≤ x ≤ 0.995, 0 ≤ y ≤ 0.05, and 0.8 ≤ a ≤ 1.2.

14. The preparation method according to claim 12 or 13, wherein the hard template agent has an average diameter of 0.2 µm-3 µm, optionally 1 µm-3 µm.

15. The preparation method according to any one of claims 12 to 14, wherein the hard template agent comprises one or more of carbon-nitrogen composite spheres, carbon spheres, phenolic resin microspheres, and melamine resin microspheres, optionally comprising phenolic resin spheres.

16. The preparation method according to any one of claims 12 to 15, wherein a ratio of a weight of the hard template agent added in step (1) to a total weight of a nickel element and a cobalt element in the mixed source is 1:20 to 3:4; or
a ratio of a weight of the hard template agent added in step (1) to a total weight of a nickel element, a cobalt element, and an M element in the mixed source is 1:20 to 3:4.

17. The preparation method according to any one of claims 12 to 16, wherein a pH value of the coprecipitation reaction in step (1) is 9-13.

18. The preparation method according to any one of claims 12 to 17, wherein a reaction temperature of the coprecipitation reaction in step (1) is 60-85 °C.

19. The preparation method according to any one of claims 12 to 18, wherein a reaction time of the coprecipitation reaction in step (1) is 5-20 h.

20. The preparation method according to any one of claims 12 to 19, wherein a stirring speed of the coprecipitation reaction in step (1) is 200-900 rpm.

21. The preparation method according to any one of claims 12 to 20, wherein step (1) specifically comprises:
preparing a hard template agent solution with a mass concentration of 1-10 g/L, a precipitant solution with a molar concentration of 1-2 mol/L, a complexing agent solution with a molar concentration of 4-8 mol/L, and a mixed salt solution containing a nickel element and a cobalt element with a total molar concentration of 1-2 mol/L, optionally, the mixed salt solution further containing an M element;
simultaneously adding the precipitant solution, the complexing agent solution, and the mixed salt solution into the hard template agent solution; and
performing the coprecipitation reaction to obtain the precursor.

22. The preparation method according to any one of claims 12 to 21, wherein the calcination in step (2) is performed at 700-900 °C;
the calcination in step (2) is performed for 6-18 h.

23. A positive electrode plate, comprising the positive electrode active material according to any one of claims 1 to 10 or the positive electrode active material obtained by the preparation method according to any one of claims 12 to 22.

24. A secondary battery, comprising the positive electrode plate according to claim 23.

25. An electric device, comprising the secondary battery according to claim 24.
